# EUROPEAN PATENT SPECIFICATION

(11) **EP 4 223 599 B1**
(45) Date of publication and mention of the grant of the patent: **02.07.2025**
(21) Application number: 22155361.3
(22) Date of filing: 07.02.2022
(51) Int. Cl.: B60T 17/00, F04B 39/04, F04B 39/16, F04B 41/02, F04C 28/28, F04C 29/02

(54) **AIR SUPPLY SYSTEM AND METHOD FOR CONTROLLING OPERATION THEREOF, PNEUMATIC SYSTEM, VEHICLE AND COMPUTER PROGRAM**
LUFTZUFUHRSYSTEM UND VERFAHREN ZUR STEUERUNG SEINES BETRIEBS, PNEUMATISCHES SYSTEM, FAHRZEUG UND COMPUTERPROGRAMM
SYSTÈME D'ALIMENTATION EN AIR ET PROCÉDÉ DE CONTRÔLE DE SON FONCTIONNEMENT, SYSTÈME PNEUMATIQUE, VÉHICULE ET PROGRAMME INFORMATIQUE

(43) Date of publication of application: 09.08.2023
(73) Proprietor: ZF CV Systems Europe BV, 1170 Brüssel (BE)
(72) Inventor: CHAMOT, Marcin, 58-400 Kamienna Góra (PL); CISKOWSKI, Sergiusz, 54-616 54-616 (PL); PENDZICH, Kevin, 30161 Hannover (DE)
(74) Representative: Copi, Joachim

(56) References cited:
- EP-A1- 3 516 218
- JP-A- H09 133 083
- US-A- 4 892 569
- US-A1- 2013 062 541

## Description

The present invention is directed to an air supply system for a vehicle, in particular for a commercial vehicle, for supplying air to a pneumatic unit. The invention is also directed to a method for controlling operation of such an air supply system. In addition, the invention is directed to a pneumatic system, to a vehicle and to a computer program.

Document EP 3 516 218 (which forms the basis for the preamble of the independent claims) presents a compressor system for a utility vehicle that comprises a compressor unit, an electric motor that drives the compressor unit, an electric motor control unit and one air processing device, that is for example configured to perform an air drying function. In said compressor system, the electric motor control unit is configured and designed such that it controls the electric motor and, at least in part, the air processing device. Further from EP 3 515 775 B1 it is known how to carry out a conditioning process by means of which a compressed-air unit is brought to an operationally ready condition before the driving of the vehicle begins. Here a control device is integrated in a control electronic system of a compressed-air preparation device of the compressed-air unit. A controller area network bus, hereinafter referred to as CAN-Bus, may connect one or more several of components for control by means of an engine control unit or at least with a control of a pneumatic brake or pneumatic suspension system.

However, these systems do not provide diagnostic features for the compressor unit. A particular problem that affects air supply systems is the so-called oil carry over, where oil particles from the compressor travel along the pneumatic lines affecting other components of the pneumatic system and even being discharged to the environment. The inventors have realized that a significant increase of oil carry over can be regarded as a sign of compressor components' wear.

Oil carry over, happens when the oil that is used to lubricate the compressor unit makes it past the separator filter and into the supply line. Currently, problems related to oil-carry over have increased due to widespread use of electronic components in compressed air systems.

There are several common causes of oil carry-over in compressed air systems. A first cause happens when there is an excessive amount of oil in the reservoir. When the fill level of the oil reservoir is too high, this can lead to oil carry over. In this case, the excess of oil is carried downstream and once the oil level in the reservoir is back to normal, oil carry over will stop. Until then, this will cause oil to enter the discharge piping. Another possible cause is a malfunction of the separator filter. Typically, the compressed air that leaves the separator tank has approximately two to three parts per million (PPM) of lubricant carry-over. If there is a significant increase in this oil carry over, the separator filter should be replaced. A third possible cause is degradation of oil over time. Typically, oil in a compressed air system should be replaced every 24 months at least. Oil that is older will fail to lubricate properly and will lose its viscosity. This can also lead to oil carry over.

In principle, excessive oil carry over is expensive, especially when the high cost of lubrication are considered. In addition, oil carry-over can cause other issues in particular within a rotary screw compressor. The oil can mix with any dirt, rust, or water that is present in the system. This sludge-like mixture has a tendency to clog the air compressor unit, which can lead to malfunction resulting in avoidable service and maintenance.

It would be beneficial to enable a remote monitoring of the compressor unit, in particular with respect to oil carry over, which requires no additional sensor-hardware in the compressor.

It is therefore an object of the present invention to provide useful connections and information for remotely monitoring the compressor unit, in particular with respect to oil carry over.

According to a first aspect of the present invention, an air supply system for a vehicle, in particular for a commercial vehicle, is provided. The air supply system is advantageously configured to supply compressed air, to a pneumatic unit of the vehicle.

The air supply system comprises a compressor unit for providing compressed air to a compressed air supply. The air is typically taken from an ambient port and then compressed in the compressor. The air supply system also comprises an air-drying unit having an input port for receiving compressed air provided by the compressor unit. The air-drying unit is configured to dry the received compressed air and to provide dried compressed air to a pneumatic supply port, in particular for supply to the pneumatic unit. The air supply system also comprises an air exhaust line to an exhaust port (3), and an air-processing control unit that is configured to ascertain or determine air-processing data indicative of an operation of the compressor unit, in particular an amount of compressed air provided by the compressor unit in a given time span.

According to the invention in order to monitor oil carry over from the compressor unit to the air-drying unit, the air supply system further comprises an oil-separator unit having an input port pneumatically connected to the compressed air supply and an output port pneumatically connected to the input port of the air-drying unit. The oil-separator unit is configured to filter out oil from the compressed air provided by the compressor unit and to provide filtered compressed air via its output port to the air-drying unit. The oil-separator unit comprises an oil-level sensor unit that is configured to provide an oil-level signal indicative of an amount of oil filtered at the oil-separator unit.

The air-processing control unit is further configured to determine an expected oil separator filling volume using the air-processing data, to receive the oil-level signal provided by the oil-separator unit and to provide a service-required signal, in dependence on the expected oil separator filling volume and the current oil-level signal.

Therefore, by using the air-processing data that is indicative of the operation of the compressor unit, and in particular of an amount of compressed air provided by the compressor unit in a given time span or time window, an estimation of the expected oil carry over can be made. This is then compared to the actual amount of oil filtered at the oil-separator unit, which is available to the air-processing control unit by means of the oil-level signal provided by the oil-separator unit. Thus, based on the air-processing data, an expected oil-separator filling volume can be calculated that is compared with the amount of oil filtered to assess a condition of the compressor unit, and, if necessary, issue a service-required signal, that is indicative of an excessive oil carry over, which is regarded as a sign of compressor components' wear, and thus an indication that the condition of the compressor unit should, for instance, be checked or that operation of the compressor unit should be reduced or discontinued. The expected oil-separator filling volume is a quantity that is indicative of an amount of oil that should have remained in the oil-separation unit after having been filtered out from the compressed air under normal expected operation of the compressor unit during a given time and that depends on the amount of compressed air provided by the compressor unit.

In the following, preferred developments of the air supply system according to the first aspect of the invention will be described with further advantages related therewith.

In a development, the air-processing data is provided to the air-processing control unit by an external air-processing data determining unit in signal communication with the air-processing unit. In another development, the air-processing data is determined by the air-processing control unit. The air-processing data is in a development provided by the compressor unit or by a monitoring or sensing unit attached thereto, and is indicative of its operation, in particular of the amount of compressed air provided by the compressor unit. In another development, the air-processing data is provided by the air-drying unit or by a monitoring or sensing unit attached thereto, and is indicative of its operation, in particular of the amount of compressed air dried by the air-drying unit. Preferably, the air-processing control unit is configured to monitor an amount of air dried by the air-drying unit in a given time span and to determine the air-processing data based on the amount of dried air that has been monitored.

The expected oil separator filling volume is determined, in a development, as a linear function of the amount of air supplied. In other developments, alternative, for example, higher-order, functions are used to determine the expected oil separator filling volume. Alternatively, the accumulated operation-time of the compressor unit is an additional variable for determining the expected oil separator filling volume, so that more oil is expected during a predetermined time span when the compressor has been running for a longer time.

Preferably, data regarding the amount of oil that exits the compressor unit during normal operation of the compressor unit is also available for the estimation of the expected oil separator filling volume at the oil-separator unit.

In a particular development, the air-processing control unit is configured to provide the service-required signal upon determining that the oil-level signal is indicative of an amount of oil filtered in the oil-separator unit that is above a critical filling value determined as a function of the expected oil separator filling volume. For example, in a development, the service-required signal is provided upon determining that the oil-level signal is indicative of an amount of oil filtered in the oil-separator unit that is above, for example, 1%, 5%, 10%, 20%, 30% or 50% of the expected amount of oil filtered at the oil-separator unit. In another development, the critical level depends on a current amount of oil filtered.

The inventors have further realized that temperature data about the temperature at the oil-separation unit can be used to optimize the amount of air used for regenerating the air-drying unit in a regeneration phase of the air-drying unit. Thus, according to the invention, the oil-separator unit further comprises a temperature sensor unit that is configured to determine a current temperature value at the oil-separator unit, and to provide a temperature signal indicative thereof. In this particular development, the air-processing control unit is further configured to receive the temperature signal and to control a regeneration phase of the air-drying unit in dependence thereof. In the regeneration phase, dried air from the pneumatic unit is used to rinse a desiccant material in the air-drying unit and then exhausted as exhaust air. The temperature signal is used by the air-processing control unit to further increase efficiency of the desiccant cartridge regeneration process.

In another development, the temperature sensor unit is further configured to determine a current temperature value of ambient air and to provide the temperature signal being further indicative thereof, In this development the air-processing control unit is further configured to control an amount of dried filtered compressed air in dependence on a difference between the current temperature value of at the oil-separator unit and the current temperature value of ambient air, in particular so that less amount of dried filtered compressed air is used for smaller temperature differences.

The amount of dried air used in the regeneration phase is advantageously controlled by the air-processing control unit. Controlling said amount of dried air as a function of the temperature at the oil-separation unit, preferably at a given distance from a discharge line or further, or as a function of a temperature difference between the ambient temperature and the temperature oil-separator unit enables an increase of the efficiency of the regeneration phase by reducing the amount of dried air used, and exhausted when the temperature at the oil-separator unit or the temperature difference is low.

In another development, which can be combined with any of the technical features described above, the air-processing control unit is configured to provide the service-required signal to a dashboard of a vehicle. The provision is preferably done via a controller area network (CAN) bus. The indication in the dashboard in then seen by the driver of the vehicle, who can then take proper action.

The service-required signal is, in a development, a binary signal, i.e. a two state indicator of the necessity or not of a service, whereas in another embodiment, the service-required signal is indicative of a current amount of oil filtered vs. the expected amount of oil at the oil-separator unit and can be output in the dashboard as a color indication, for example transitioning from green, as indicative of a safe operation, to red, as indicative of a requirement to service the compressor unit.

In another development, the oil-level sensor unit, and optionally the temperature sensor unit, is (or are) in signal communication with a vehicle controller area network bus.

In yet another development the air-processing control unit is an integral part of the air-drying unit, and is preferably configured to monitor an amount of compressed air dried by the air-drying unit and to determine the air-processing data based thereon.

In another alternative development, the oil-level sensor unit, and optionally the temperature sensor unit, is (or are) in signal communication with an electronic control unit that is further configured to receive the air-processing data from the air-drying unit. In this particular development, the electronic control unit acts as the air-processing control unit.

In yet another alternative embodiment, the oil-level sensor unit, and optionally the temperature sensor unit, is (or are) in signal communication with a first electronic control unit, and wherein the air-drying unit is configured to provide the air-processing data to a second electronic control unit, different than the first electronic control unit. In this particular development, the first electronic control unit and the second electronic control unit form part of a decentralized air-processing control unit.

A second aspect of the present invention is formed by a pneumatic system for a vehicle. The pneumatic system comprises an air supply system in accordance with the first aspect of the present invention, and a pneumatic unit connected to the pneumatic supply port of the air supply system, in particular a suspension unit and/or a braking unit.

The pneumatic system of the second aspect thus shares the advantages of the air supply system of the first aspect of the invention and of any of its developments.

In a preferred development, the pneumatic system also comprises a compressed air reservoir arranged in fluid communication between the output port of the air-drying unit and the pneumatic unit and configured to store compressed dried air and to provide said compressed dried air to the pneumatic unit or to the pneumatic units when required.

A third aspect of the invention is formed by a vehicle, in particular a commercial vehicle, which comprises a pneumatic system in accordance with the second aspect of the invention. Thus, the vehicle shares the advantages of the pneumatic system of the second aspect and therefore also of the air supply system of the first aspect of the invention.

A fourth aspect of the invention is formed by a method for controlling operation of an air supply system for monitoring oil carry over in a pneumatic system. The method comprises:
- providing compressed air to a compressed air supply;
- filtering out oil from the compressed air and providing filtered compressed air;
- drying the filtered compressed air and providing dried filtered compressed air to a pneumatic supply port;
- ascertaining or determining air-processing data indicative of an operation of a compressor unit, in particular an amount of compressed air provided by a compressor unit in a given time span.

According to the invention the method further comprises:
- providing an oil-level signal indicative of an amount of oil filtered;
- determining an expected oil separator filling volume using the air-processing data, and
- receiving the oil-level signal and providing a service-required signal, in dependence on the expected oil separator filling volume and the current oil-level signal.

The method of the fourth aspect thus shares the advantages of the air supply system of the first aspect.

Also in the fourth aspect of the invention the method further comprises
- determining a current temperature value at an oil-separator unit and providing a temperature signal indicative thereof; and
- controlling a regeneration phase of an air-drying unit in dependence thereof, in particular by controlling an amount of dried filtered compressed air in dependence on an absolute value of a difference between the current temperature value of at the oil-separator unit and a current temperature value of ambient air, in particular so that less amount of dried filtered compressed air is used for smaller temperature differences.

In a further development, the method additionally or alternatively comprises, providing the service-required signal to a dashboard of a vehicle that comprises the controlled air supply system.

A fifth aspect of the invention is formed by a computer program comprising instructions which, when the program is executed by an air supply system, cause the air supply system to carry out the method of the fourth aspect or of any of its developments.

It shall be understood that the air supply system valve of claim 1, the pneumatic system of claim 9, the vehicle of claim 10, the method for controlling operation of an air supply system of claim 11 and the computer program of claim 13 have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object, which would be limited in comparison to the object claimed in the claims. For specified design ranges, values within the specified limits are also disclosed as limit values and thus arbitrarily applicable and claimable.

The following drawings show in:
- Fig. 1: a comparative schematic diagram of an air supply system to illustrate the embodiments of the invention in Fig. 2 to Fig. 10;
- Fig. 2: a schematic block diagram of a first embodiment of an air supply system according to the invention connected to a pneumatic unit;
- Fig. 3: a schematic block diagram of a second embodiment of an air supply system according to the invention connected to a pneumatic unit;
- Fig. 4: a schematic block diagram of a third embodiment of an air supply system according to the invention connected to a pneumatic unit;
- Fig. 5: a schematic block diagram of a fourth embodiment of an air supply system according to the invention connected to a pneumatic unit;
- Fig. 6: a schematic block diagram of a fifth embodiment of an air supply system according to the invention connected to a pneumatic unit;
- Fig. 7: a schematic block diagram of a sixth embodiment of an air supply system according to the invention connected to a pneumatic unit;
- Fig. 8: a schematic block diagram of a seventh embodiment of an air supply system according to the invention connected to a pneumatic unit;
- Fig. 9: a schematic block diagram of an embodiment of an vehicle according with the invention that comprises an inventive pneumatic system including an inventive air supply system;
- Fig. 10: a flow diagram of a method for controlling operation of an air supply system according to the invention.

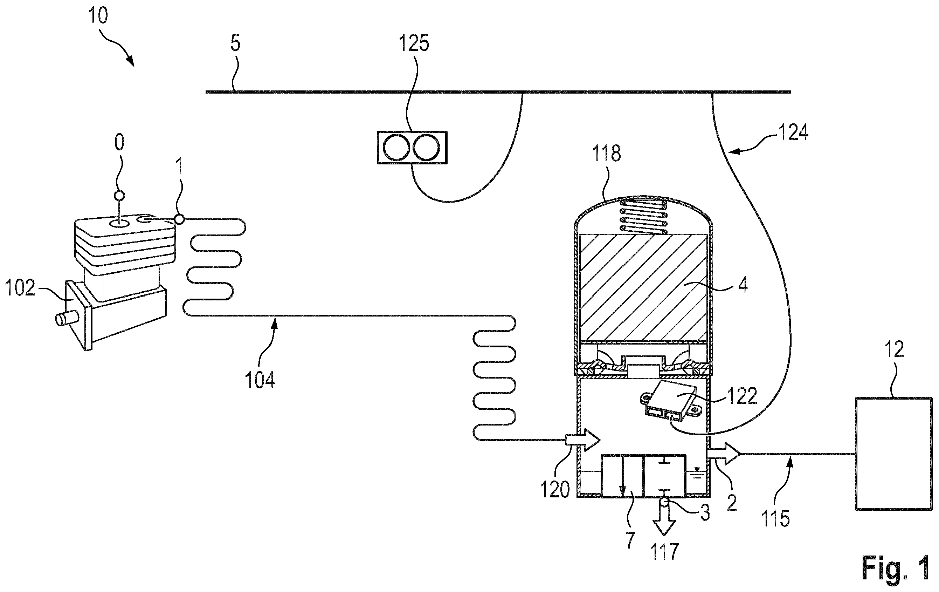

Fig. 1 shows a schematic diagram of a known air supply system 10 for a vehicle, in particular for a commercial vehicle, for supplying air to a pneumatic unit 12. The air supply system 10 comprises a compressor unit 102 for providing compressed air 104 from an ambient air port 0 to a compressed air supply 1, in other words, the compressor unit intakes ambient air the ambient air port 0, compresses said air and provides comprised air 104 to the compressed air supply 1. The air supply system 10 also comprises an air-drying unit 118 having an input port 120 for receiving the compressed air 104 provided by the compressor unit 102. The air-drying unit is configured to dry the received compressed air 114, by means of a desiccant material 4, and to provide dried compressed air 115 to a pneumatic supply port 2, in particular for supplying compressed air to the pneumatic unit 12. The air supply system 10, comprises an air exhaust line 117 to an exhaust port 3, for instance for exhausting air used during a regeneration phase of the air drying unit 118.

The air supply system 10 also comprises an air-processing control unit 122 for controlling operation of the air drying unit, in particular for controlling a drying phase in which dried compressed air is supplied to the pneumatic unit, and a regeneration phase, in which previously supplied dried compressed air is used to regenerate the desiccant material and then exhausted via the exhaust port 3. For example, the air-processing control unit is configured to control exhaust valve 7 for allowing a fluid connection between the supply port 2 and the exhaust port 3, for instance, during the regeneration phase.

The air-processing unit is signally connected to a CAN bus 5, to which a dashboard 125 is also connected. The dashboard is advantageously configured to output visual signals pertaining to the operation of the air-drying unit or the air-processing control unit to a driver of the commercial vehicle. In particular, the air-processing control unit 122 is configured to ascertain or determine air-processing data 124 indicative of an operation of the compressor unit 102, in particular an amount, volume or flow of compressed air 104 provided by the compressor unit 102 in a given time span. This data can, for instance, be provided to an electronic control unit (not shown) also connected to the CAN bus 5.

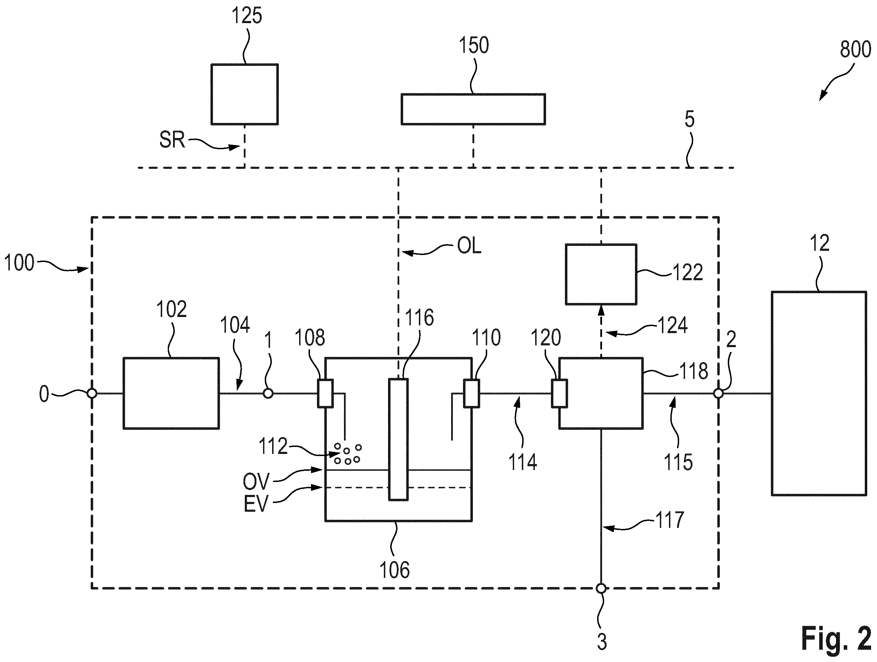

Fig. 2 shows a schematic block diagram of a first embodiment of an air supply system 100 according to the invention. Those technical features of the air supply system 100 that are similar or identical in function to those of the known air supply system 10 of Fig. 1 will be referred to using the same reference number. As in the case of the air supply system 10 of Fig. 1, the air supply system 100 comprises a compressor unit 102 for taking in ambient air via the ambient air port 0, compressing said air and providing compressed air 104 to the compressed air supply 1. The air supply system 100 also comprises an air-drying unit 118 having an input port 120 for receiving the compressed air 104 provided by the compressor unit 102. The air-drying unit 118 is configured to dry the received compressed air 114, by means of a desiccant material (not shown), and to provide dried compressed air 115 to a pneumatic supply port 2, in particular for supplying compressed air to the pneumatic unit 12. The air supply system 100, comprises an air exhaust line 117 to an exhaust port 3, for instance for exhausting air used during a regeneration phase of the air drying unit 118.

The air supply system 100 also comprises an air-processing control unit 122 for controlling operation of the air drying unit 118, in particular for controlling a drying phase in which dried compressed air is supplied to the pneumatic unit, and a regeneration phase in which previously supplied dried compressed air is received via the supply port 2 and used to regenerate the desiccant material and then exhausted via the exhaust port 3.

The air-processing control unit 122 is signally connected to a CAN bus 5, to which a dashboard 125 is also connected. The dashboard is advantageously configured to output visual signals pertaining to the operation of the air-drying unit or the air-processing control unit to a driver of the commercial vehicle. In particular, the air-processing control unit is configured to ascertain or determine air-processing data indicative of an operation of the compressor unit 102, in particular an amount, volume or flow of compressed air 104 provided by the compressor unit 102 in a given time span. This data can, for instance, be provided to an electronic control unit 150 also connected to the CAN bus 5. The air-processing control unit 122 can be operated by the electronic control unit 150 via communication signals provided via the CAN bus 5.

In order to monitor oil carry over from the compressor unit 102 to the air-drying unit 118, the air supply system 100 further comprises an oil-separator unit 106 having an input port 108 pneumatically connected to the compressed air supply 1, and an output port 110 pneumatically connected to the input port 120 of the air-drying unit 118, i.e. the oil separator unit 106 is arranged between the compressor unit 102 and the air-drying unit 118. The oil-separator unit 106 is configured to filter out oil 112 from the compressed air 104 provided by the compressor unit 102, and to provide filtered compressed air 114 via the output port 110 to the air-drying unit. The oil-separator unit 106 further comprises an oil-level sensor unit 116 that is configured to provide an oil-level signal OL. The oil-level signal is indicative of an amount of oil OV filtered at the oil-separator unit 106.

The air-processing control unit 122 is further configured to determine an expected oil separator filling volume EV using the air-processing data 124, to receive the oil-level signal OL, either directly from the oil-level sensor or via the electronic control unit 150, and to provide a service-required signal SR, in dependence on the expected oil separator filling volume EV and the current oil-level signal OL. The communication of the signals is performed, in this particular example, via the CAN bus 5 that connects the air-processing unit 122, the oil-level sensor 116, the dashboard 125 and the electronic control unit 150.

Preferably, in the air supply system 100, the air-processing control unit 122 is configured to provide the service-required signal SR upon determining that the oil-level signal OL is indicative of an amount of oil filtered OV in the oil-separator unit 106 that is above a critical filling value determined as a function of the expected oil separator filling volume EV. For example, in a particular air supply system 100, the service-required signal SR is provided upon determining that the oil-level signal is indicative of an amount of oil filtered in the oil-separator OV unit that is above, for example, 1%, 5%, 10%, 20%, 30% or 50% of the expected amount of oil filtered EV at the oil-separator unit 106. In another air supply system, the critical level may be dependent on a current amount of oil filtered.

The air supply system 100 is connected to a pneumatic unit 12 together forming a pneumatic system 800. The pneumatic unit can be, for instance, a braking unit, a suspension unit, an inflation unit or any other pneumatic unit, in particular of a vehicle.

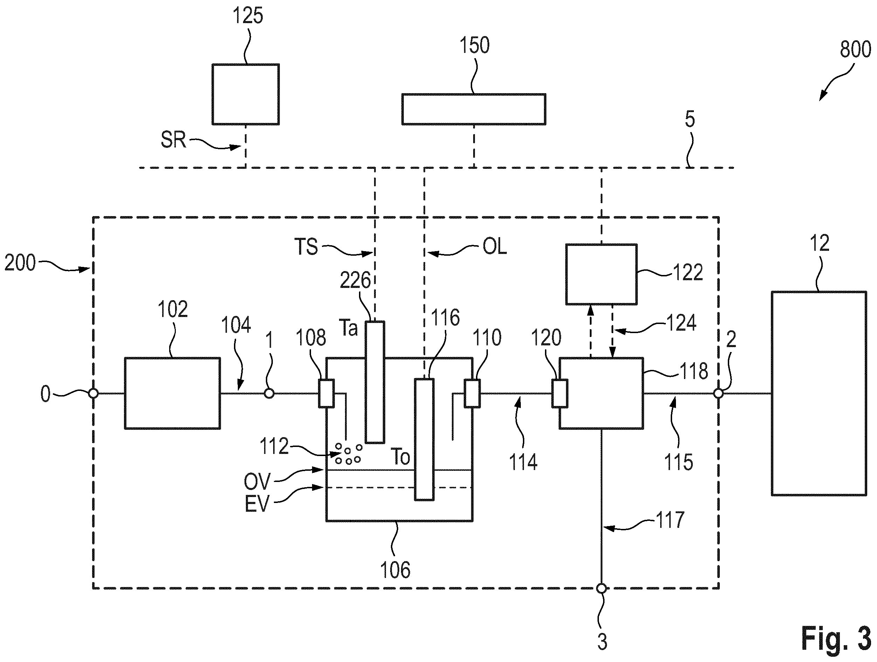

Fig. 3 shows a schematic block diagram of a second embodiment of an air supply system 200 according to the invention. The difference between the air supply system 200 of Fig. 3 and the air supply system 100 of Fig. 2 is that the oil-separator unit 106 of the air supply system 200 also comprises a temperature sensor unit 226 that is configured to determine a current temperature value To at the oil-separator unit 106 and to provide a temperature signal TS indicative thereof, via the CAN bus 5, and optionally via the electronic control unit 150, to the air-processing control unit 122. The air-processing control unit 122 is further configured to receive the temperature signal TS and to control a regeneration phase of the air-drying unit 118 in dependence thereof. In the regeneration phase, dried air from the pneumatic unit is received via the pneumatic supply port 2, used to rinse a desiccant material (see 4 in Fig. 1) in the air-drying unit 118, and then exhausted as exhaust air via the exhaust line 117 to the exhaust port 3.

Preferably, the temperature sensor unit 226 is additionally configured to determine a current temperature value of ambient air Ta at the surroundings of the oil-separator unit, and to provide the temperature signal TS being further indicative thereof. In this particular example, the air-processing control unit 122 is further configured to control an amount of dried filtered compressed air 115 in dependence on a difference between the current temperature value at the oil-separator unit To and the current temperature value of ambient air Ta, in particular so that less amount of dried filtered compressed air 115 is used for smaller temperature differences between To and Ta.

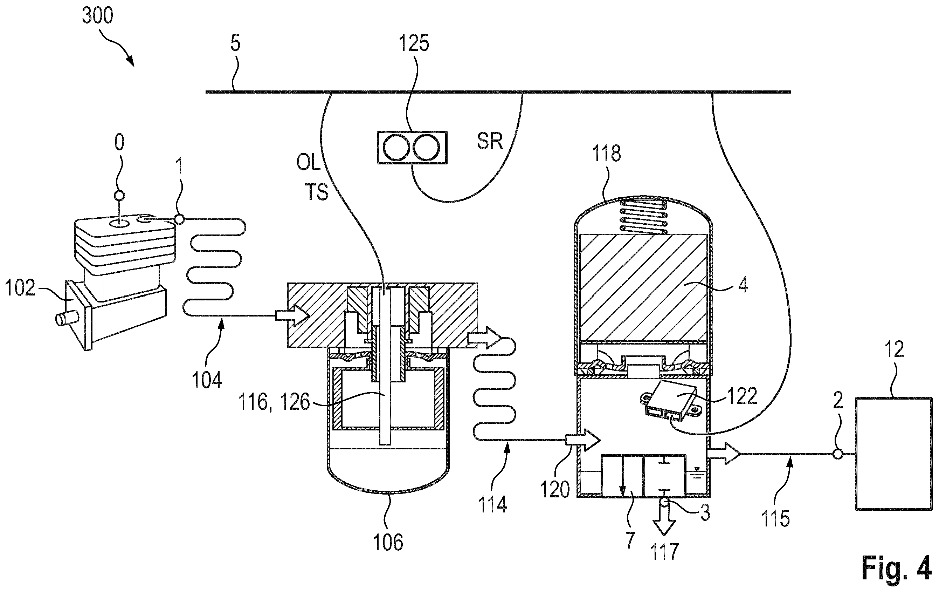

In another embodiment (not shown), the temperature sensor unit and the oil-level sensor are integrated into a common sensing unit, as it will be explained with reference to Fig. 4 to Fig. 8.

The air supply system 200 is connected to a pneumatic unit 12 together forming a pneumatic system 800.

Fig. 4 to Fig. 8 show block diagrams of respective embodiments of an air supply system according to the invention, which are connected to a pneumatic unit 12. The following discussion will focus on the technical features differentiating these embodiments from the air supply systems 100 and 200. Those features having identical or similar technical functions are referred to using the same reference numbers. The explanation of these features provided above with respect to air supply systems 100 and 200 also applies to the air supply systems 300, 400, 500, 600 and 700 of Fig. 4, Fig. 5, Fig. 6, Fig. 7 and Fig. 8 respectively.

In the air supply system 300 of Fig. 4, the air-processing control unit 122 is an integral part of the air-drying unit 118. The air drying unit 118 thus includes, inside its housing, the air-processing control unit 122, which is connected to the oil-level sensor unit 116 and optionally to a combined sensing unit 126 including a both the oil-level sensor unit and a temperature sensor unit, as well as to the dashboard 125, via the CAN bus 5.

In Fig. 4, Fig. 5, Fig. 6, Fig. 7 and Fig. 8, a sensing unit is formed by the oil-level sensor unit 116 alone. As an option the sensing unit is formed by a combination of an oil-level sensor unit and a temperature sensor unit, indicated by the reference number 126; the combined sensing unit 126 is here represented as a single unit for the sake of simplicity.

However also, in a variant, the oil-level sensor and the temperature sensor unit of the combined sensing unit 126 may be present as separate units 116, 226, as exemplarily shown in Fig. 3.

In particular, each one of the Fig. 4 to Fig. 8 shows two different possibilities, namely, an oil-separator unit 106 with only an oil-level sensor unit 116, and an oil-separator unit with a combined sensing unit 126 including an oil-level sensor unit and a temperature sensor unit.

The air supply system 300 thus includes a compressor-monitoring feature implemented by a CAN sensor (the oil-level sensor 116 in direct signal communication with the CAN bus 5) and the electronic air-processing control unit (E-APU), where, based on compressor operation data collected by the air-processing control unit 122 and on data provided by the oil-level sensor unit 116, a need for maintenance or repair of the compressor 102 can be determined. Further, if the CAN sensor also includes a temperature sensor unit, thus forming a combined sensing unit 126, an improvement of the amount of air used in the regeneration phase can also be achieved, based on information regarding the temperature at the oil-separator unit 106 or regarding the temperature difference between the oil-separator unit 106 and the environment.

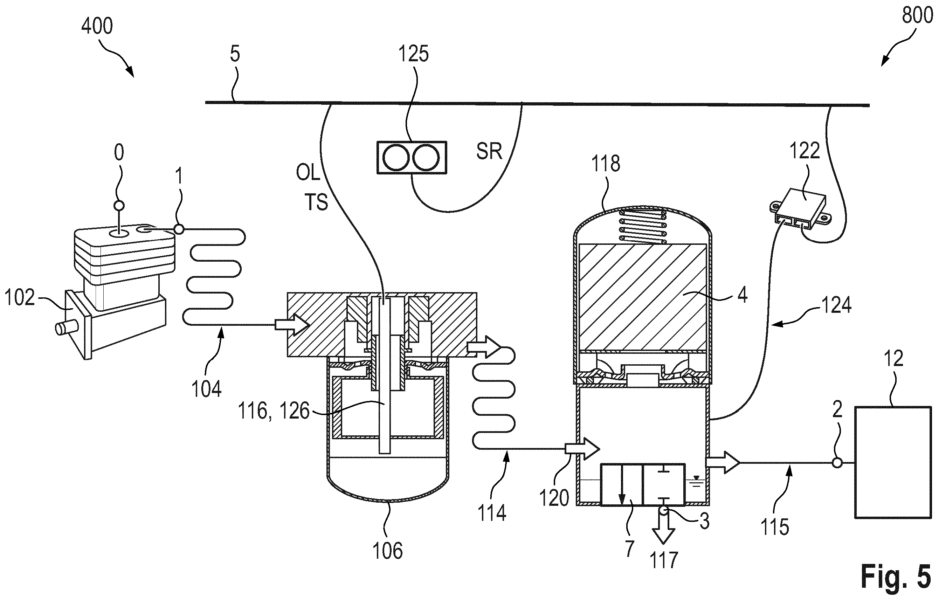

Alternatively, as shown in Fig. 5, the air processing unit control 122 of the air supply system 400 is not an integral part of the air-drying unit 118. However, it is connected thereto in order to receive or ascertain the air-processing data 124, and also to control the operation of the air-drying unit 118, e.g. to control the drying phase and the regeneration phase of the air-drying unit 118. For instance, the air processing unit control 122 of air supply system 400 can be integrated in the electronic control unit. Thus, the air supply system 400 of Fig. 5 comprises an air-processing control unit 122 external to the air-drying unit 118 that is part of, or directly controlled by, the electronic control unit, and also an oil-separator unit 106 with CAN sensors 116, 126.

In the exemplary air supply systems 100, 200, 300 and 400 shown in Fig. 2, Fig.3, Fig. 4 and Fig. 5 respectively, the oil-level sensor unit 116, and, when present, the combination as a combined sensing unit 126 of oil-level sensor unit and temperature sensor unit (either in a single sensing unit or in separate units) , are CAN sensors, i.e. sensors that are directly connected to the CAN bus and provide their signals to directly to the electronic control unit 150 or to the air-processing control unit 122 via the CAN bus. However, in other embodiments, the sensors are not CAN sensors, but, for example, analog sensors with a read-in via the ECU or the air-processing control unit as it will be discussed in the following.

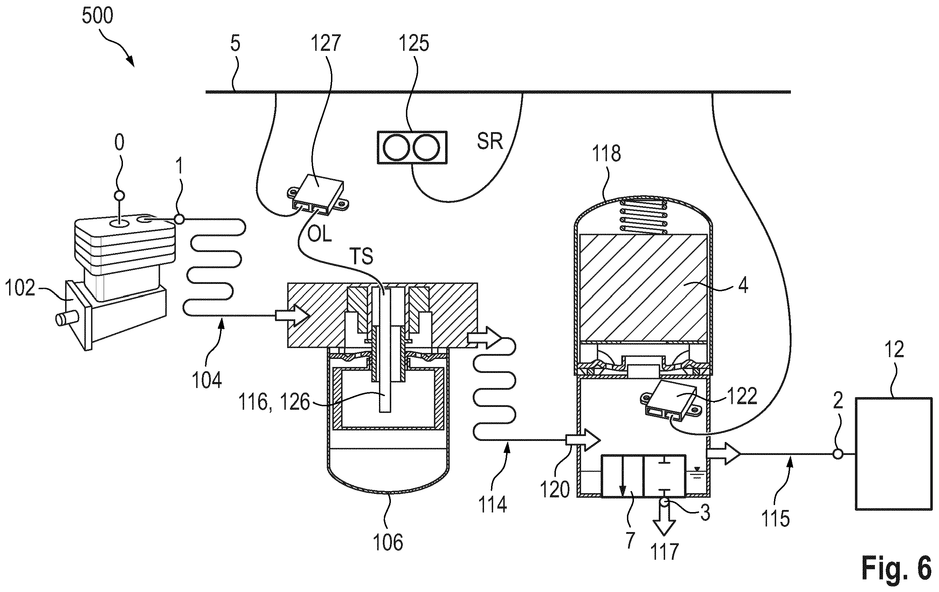

Fig. 6 shows an air supply system 500 that has an electronic air-processing control unit 122 integrated in the air-drying unit 118, and an oil-separator unit with an analog oil-level sensor 116 or a combination as a combined sensing unit 126 of an analog oil-level sensor unit and an analog temperature sensor unit (either combined in a single sensing unit or in respective different units) with read-in via an external electronic control unit 127 that is connected to the CAN bus 5.

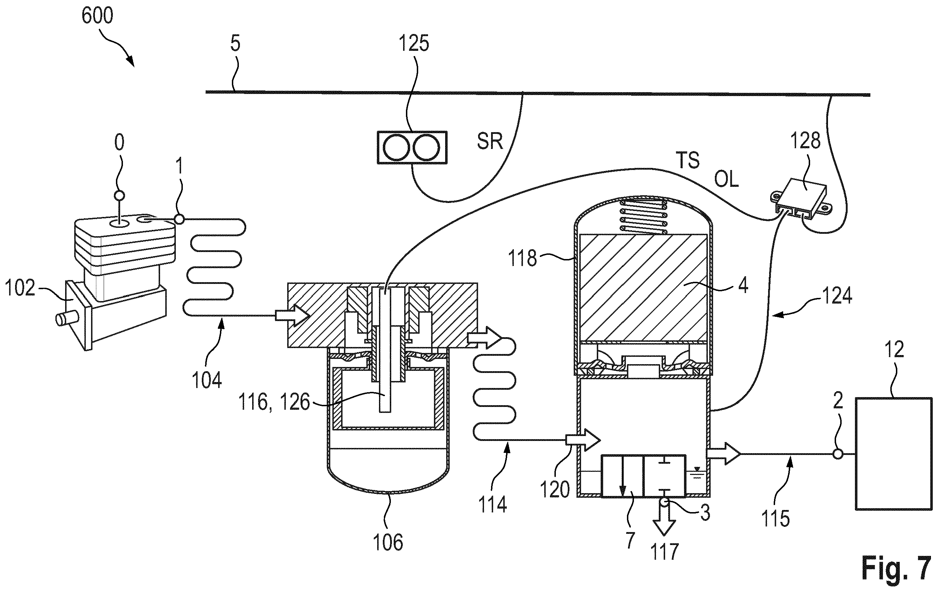

In another embodiment, as shown for the air supply system 600 of Fig.7, the analog sensors (oil-level sensor unit 116 or combination as a combined sensing unit 126 of oil-level sensor unit and temperature sensor unit) are connected to an electronic control unit 128, that also acts as the air-processing control unit and thus receives the signals OL and TS and also receives or determines the air-processing data 124.

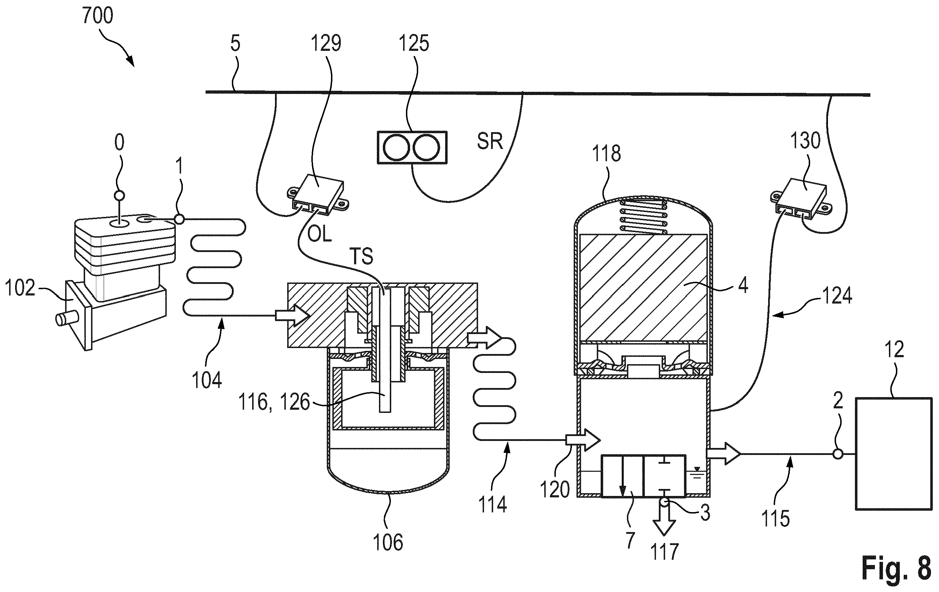

In another embodiment of the air supply system 700, shown in Fig. 8, the oil-level sensor unit 116, or optionally, the combination as a combined sensing unit 126 of the oil-level sensor unit and the temperature sensor unit, are in signal communication with a first electronic control unit 129, and the air-drying unit 118 is configured to provide the air-processing data 124 to a second electronic control unit 130, different from the first electronic control unit 129. The first electronic control unit 129 and the second electronic control unit 130 thus form part of a decentralized air-processing control unit.

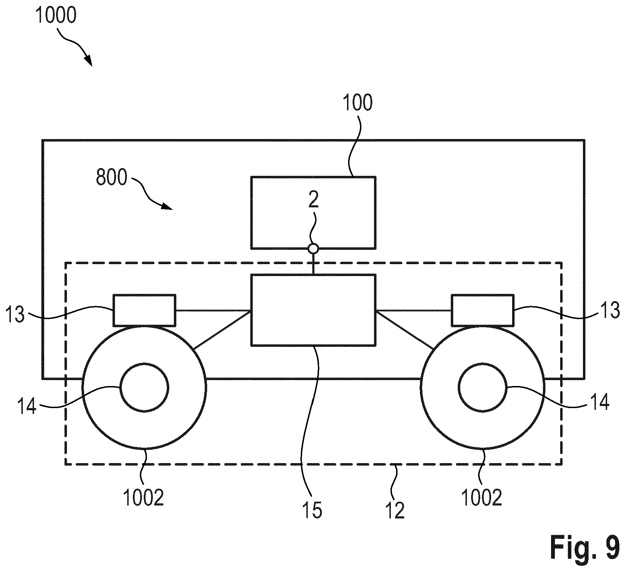

Fig. 9 shows a schematic block diagram of an embodiment of a vehicle 1000 according to the invention that comprises an inventive pneumatic system800 that includes an inventive air supply system, for example air supply system 100, although in other embodiments of the pneumatic system 800, the air supply system can be in accordance with the air supply systems 200, 300, 400, 500, 600 or 700.

The pneumatic system also comprises a pneumatic unit 12 that is connected to the pneumatic supply port 2 of the air supply system 100. In particular, the pneumatic unit comprises an air reservoir 15 for storing compressed air received during the drying phase of the air-drying unit and for supplying stored compressed air for the regeneration phase. A suspension unit 13 and a braking unit 14 are connected to the air reservoir 15 and configured to be operated using the compressed air stored at the air reservoir 15. The suspension unit 13 may for example include bellows and the braking unit may for example include air brakes, in which compressed air pressing on a piston is used to apply the pressure to the brake pad or brake shoe needed to stop the vehicle. Air brakes are typically used in large heavy vehicles, particularly those having multiple trailers which must be linked into the brake system, such as trucks, buses, trailers, semi-trailers and other commercial vehicles.

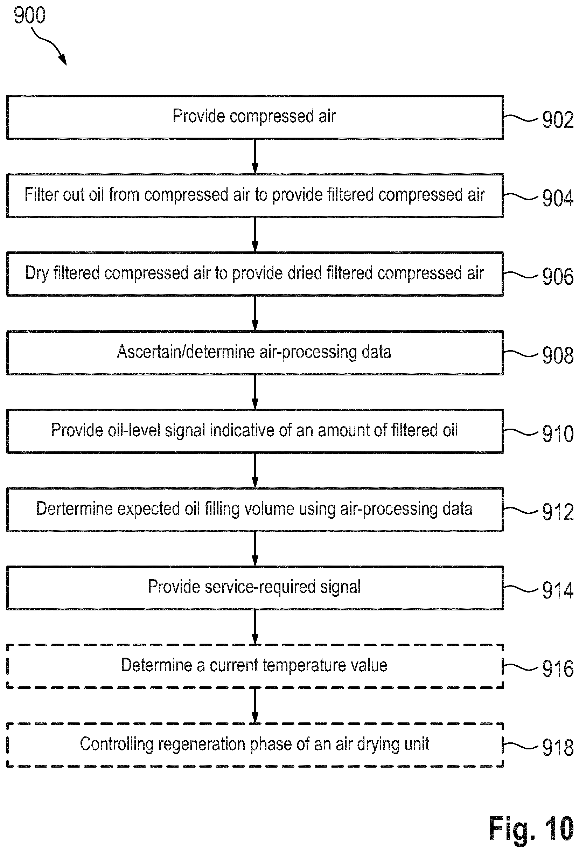

Fig. 10 shows a flow diagram of an embody method 900 for controlling operation of an air supply system 100, 200, 300, 400, 500, 600, 700 for monitoring oil carry over in a pneumatic system 800. The method 900 comprises, in a step 902, providing compressed air 104 to a compressed air supply 1 ; in a step 904, filtering out oil 112 from the compressed air 104 and providing filtered compressed air 114; in a step 906, drying the filtered compressed air and providing dried filtered compressed air to a pneumatic supply port 2; in a step 908, ascertaining or determining air-processing data 124 indicative of an operation of the compressor unit 102, in particular an amount of compressed air 104 provided by the compressor unit 102 in a given time span; in a step 910, providing an oil-level signal OL indicative of an amount of oil filtered OV; in a step 912, determining an expected oil separator filling volume EV using the air-processing data 124, and a step 914, receiving the oil-level signal OL and providing a service-required signal SR, in dependence on the expected oil separator filling volume EV and the current oil-level signal OL. Preferably, further within step 914, the service-required signal SR is provided to a dashboard 125 of a vehicle 1000. The vehicle comprises the controlled air supply system 100, 200, 300, 400, 500, 600, 700 for monitoring oil carry over in the pneumatic system 800 as described hereinbefore.

As indicated by the dashed lines in Fig. 10, the method 900 may further comprise, in a step 916, determining a current temperature value To at an oil-separator unit 106 and providing a temperature signal TS indicative thereof; and in a step 918, controlling a regeneration phase of an air-drying unit 118 in dependence thereof, in particular by controlling an amount of dried filtered compressed air 115 in dependence on an absolute value of a difference between the current temperature value of at the oil separator To and a current temperature value of ambient air Ta, in particular so that less amount of dried filtered compressed air 115 is used for smaller temperature differences.

In summary, the embodiments described are meant to support the concept of the invention, which is directed to an air supply system with integrated compressor monitoring capability, in particular in terms of oil-carry over. The air supply system comprises a compressor unit for providing compressed air, an air-drying unit for providing dried compressed air, an air-processing control unit configured to ascertain air-processing data indicative of an operation of the compressor unit, an oil-separator unit configured to filter out oil from the compressed air provided by the compressor unit and comprising an oil-level sensor unit configured to provide an oil-level signal indicative of an amount of oil filtered at the oil-separator unit. The air-processing control unit is further configured to determine an expected oil separator filling volume using the air-processing data, to receive the oil-level signal and to provide a service-required.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

### LIST OF REFERENCE NUMBERS (PART OF THE DESCRIPTION)

- 0: Ambient air port
- 1: Compressed air supply
- 2: Pneumatic supply port
- 3: Exhaust port
- 4: Desiccant material
- 5: CAN bus
- 7: Exhaust valve
- 10: Air supply system
- 12: Pneumatic unit
- 13: Suspension unit
- 14: Braking unit
- 15: Air reservoir
- 100: Air supply system
- 102: Compressor unit
- 104: Compressed air
- 106: Oil-separator unit
- 108: Input port of oil separator unit
- 110: Output port of oil separator unit
- 112: Oil
- 114: Filtered compressed air
- 115: Compressed dried air
- 116: Oil-level sensor unit
- 117: Exhaust line
- 118: Air-drying unit
- 120: Input port of air-drying unit
- 122: Air-processing control unit
- 124: Air-processing data
- 125: Dashboard
- 126: a combined sensing unit with combination of oil-level sensor unit and temperature sensor unit
- 127: External electronic control unit
- 128: Electronic control unit
- 129: First electronic control unit
- 130: Second electronic control unit
- 150: Electronic control unit
- 200: Air supply system
- 226: Temperature sensor unit
- 300: Air supply system
- 400: Air supply system
- 500: Air supply system
- 600: Air supply system
- 700: Air supply system
- 800: Pneumatic system
- 900: Method
- 902: Method step
- 904: Method step
- 906: Method step
- 908: Method step
- 910: Method step
- 912: Method step
- 914: Method step
- 916: Method step
- 918: Method step
- EV: Expected oil-separator filling volume
- OL: Oil-level signal
- OV: Amount of filtered oil
- SR: Service-required signal

## Claims

1. Air supply system (100, 200, 300, 400, 500, 600, 700) for a vehicle, in particular for a commercial vehicle, for supplying air to a pneumatic unit (12), the air supply system comprising:
- a compressor unit (102) for providing compressed air to a compressed air supply (1),
- an air-drying unit (118) having an input port (120) for receiving compressed air provided by the compressor unit (102) and configured to dry the received compressed air (114) and to provide dried compressed air (115) to a pneumatic supply port (2), in particular for supply to the pneumatic unit (12)
- an air exhaust line (117) to an exhaust port (3),
the air supply system (100) further comprising:
- an air-processing control unit (122) configured to ascertain or determine air-processing data (124) indicative of an operation of the compressor unit (102), in particular an amount of compressed air (104) provided by the compressor unit (102) in a given time span,
**characterized in that** for monitoring oil carry over from the compressor unit (102) to the air-drying unit (118), the air supply system (100, 200, 300, 400, 500, 600, 700) further comprises:
- an oil-separator unit (106) having an input port (108) pneumatically connected to the compressed air supply (1) and an output port (110) pneumatically connected to the input port (120) of the air-drying unit (118), the oil-separator unit (106) being configured to filter out oil (112) from the compressed air (104) provided by the compressor unit (102) and to provide filtered compressed air (114) via the output port (110) to the air-drying unit, the oil-separator unit (106) further comprising an oil-level sensor unit (116) configured to provide an oil-level signal (OL) indicative of an amount of oil filtered (OV) at the oil-separator unit (106); and wherein
- the air-processing control unit (122) is further configured to determine an expected oil separator filling volume (EV) using the air-processing data (124), to receive the oil-level signal (OL) and to provide a service-required signal (SR), in dependence on the expected oil separator filling volume and the current oil-level signal (OL), and wherein
the oil-separator unit (106) further comprises a temperature sensor unit (126, 226) configured to determine a current temperature value (To) at the oil-separator unit (106) and to provide a temperature signal (TS) indicative thereof, and wherein the air-processing control unit (122) is further configured to receive the temperature signal (TS) and to control a regeneration phase of the air-drying unit (118) in dependence thereof, wherein in the regeneration phase, dried air from the pneumatic unit is used to rinse a desiccant material (4) in the air-drying unit and then exhausted as exhaust air (117).

2. The air supply system (100, 200, 300, 400, 500, 600, 700) of claim 1, wherein the air-processing control unit (122) is configured to provide the service-required signal (SR) upon determining that the oil-level signal (OL) is indicative of an amount of oil filtered (OV) in the oil-separator unit (106) that is above a critical filling value determined as a function of the expected oil separator filling volume (EV).

3. The air supply system (200) of claim 1, wherein the temperature sensor unit (126, 226) is further configured to determine a current temperature value of ambient air (Ta) and to provide the temperature signal (TS) being further indicative thereof, and wherein the air-processing control unit is further configured to control an amount of dried filtered compressed air (115) in dependence on a difference between the current temperature value of at the oil-separator unit (To) and the current temperature value of ambient air (Ta), in particular so that less amount of dried filtered compressed air (115) is used for smaller temperature differences.

4. The air supply system (100, 200, 300, 400, 500, 600, 700) of any of the preceding claims, wherein the air-processing control unit (122) is configured to provide the service-required signal (SR) to a dashboard (125) of a vehicle (1000).

5. The air supply system (100, 200, 300, 400) of any of the preceding claims, wherein the oil-level sensor unit (116), and optionally a temperature sensor unit (126, 226), is or are in signal communication with a vehicle controller area network bus (5).

6. The air supply system (300, 500) of any of the preceding claims, wherein the air-processing control unit (122) is an integral part of the air-drying unit (118).

7. The air supply system (600) of any of the preceding claims, wherein the oil-level sensor unit (116) and optionally a temperature sensor unit (126, 226) is or are in signal communication with an electronic control unit (128) that is further configured to receive the air-processing data from the air-drying unit, the electronic control unit (128) acting as the air-processing control unit (122).

8. The air supply system (700) of any of the preceding claims, wherein the oil-level sensor unit (116) and optionally a temperature sensor unit (126, 226) is or are in signal communication with a first electronic control unit (129), and wherein the air-drying unit (118) is configured to provide the air-processing data (124) to a second electronic control unit (130), different than the first electronic control unit (128), the first electronic control unit and the second electronic control unit forming part of a decentralized air-processing control unit (122).

9. A pneumatic system (800) for a vehicle (1000), comprising an air supply system (100, 200, 300, 400, 500, 600, 700) in accordance with any of the preceding claims 1 to 8, and a pneumatic unit (12) connected to the pneumatic supply port (2) of the air supply system, in particular a suspension unit (13) and/or a braking unit (14).

10. A vehicle (1000), in particular a commercial vehicle (1000), comprising a pneumatic system (10) in accordance with claim 9.

11. Method (900) for controlling operation of an air supply system (100, 200, 300, 400, 500, 600, 700) for monitoring oil carry over in a pneumatic system (10), the method (900) comprising:
- providing (902) compressed air (104) to a compressed air supply (1);
- filtering out (904) oil (112) from the compressed air (104) and providing filtered compressed air (114);
- drying (906) the filtered compressed air (114) and providing dried filtered compressed air (115) to a pneumatic supply port (2);
- ascertaining or determining (908) air-processing data (124) indicative of an operation of a compressor unit (102), in particular an amount of compressed air (104) provided by a compressor unit (102) in a given time span, **characterized in that** the method further comprises
- providing (910) an oil-level signal (OL) indicative of an amount of oil filtered (OV);
- determining (912) an expected oil separator filling volume (EV) using the air-processing data (124), and
- receiving the oil-level signal (OL) and providing (914) a service-required signal (SR), in dependence on the expected oil separator filling volume (EV) and the current oil-level signal (OL), and
- determining (916) a current temperature value (To) at an oil-separator unit (106) and providing a temperature signal (TS) indicative thereof; and
- controlling (918) a regeneration phase of an air-drying unit (118) in dependence thereof, in particular by controlling an amount of dried filtered compressed air (115) in dependence on an absolute value of a difference between the current temperature value of at the oil separator (To) and a current temperature value of ambient air (Ta), in particular so that less amount of dried filtered compressed air (115) is used for smaller temperature differences.

12. The method (900) of claim 11, further comprising, providing (914) the service-required signal to a dashboard (125) of a vehicle (1000) that comprises the controlled air supply system (100, 200, 300, 400, 500, 600, 700).

13. A computer program comprising instructions, which, cause the air supply system to carry out the method (800) any of the claims 11 to 12 when the program is executed by an air supply system.

## Patentansprüche

1. Luftversorgungssystem (100, 200, 300, 400, 500, 600, 700) für ein Fahrzeug, insbesondere für ein Nutzfahrzeug, zum Versorgen einer pneumatischen Einheit (12) mit Luft, das Luftversorgungssystem umfassend:
- eine Kompressoreinheit (102) zum Bereitstellen von Druckluft einer Druckluftversorgung (1),
- eine Lufttrocknungseinheit (118), die einen Eingangsanschluss (120) zum Empfangen von Druckluft aufweist, die durch die Kompressoreinheit (102) bereitgestellt wird, und die konfiguriert ist, um die empfangene Druckluft (114) zu trocknen und um getrocknete Druckluft (115) einem pneumatischen Versorgungsanschluss (2) bereitzustellen, insbesondere für eine Versorgung der pneumatischen Einheit (12)
- eine Luftauslassleitung (117) zu einem Auslassanschluss (3), das Luftversorgungssystem (100) ferner umfassend:
- eine Luftaufbereitungssteuereinheit (122), die konfiguriert ist, um Luftaufbereitungsdaten (124) zu ermitteln oder bestimmen, die einen Betrieb der Kompressoreinheit (102) anzeigen, insbesondere eine Menge an Druckluft (104), die durch die Kompressoreinheit (102) in einer gegebenen Zeitspanne bereitgestellt wird,
**dadurch gekennzeichnet, dass,** zum Überwachen einer Ölverschleppung von der Kompressoreinheit (102) zu der Lufttrocknungseinheit (118), das Luftversorgungssystem (100, 200, 300, 400, 500, 600, 700) ferner umfasst:
- eine Ölabscheidereinheit (106), die einen Eingangsanschluss (108), der mit der Druckluftversorgung (1) pneumatisch verbunden ist, und einen Ausgangsanschluss (110) aufweist, der mit dem Eingangsanschluss (120) der Lufttrocknungseinheit (118) pneumatisch verbunden ist, wobei die Ölabscheidereinheit (106) konfiguriert ist, um Öl (112) aus der Druckluft (104), die durch die Kompressoreinheit (102) bereitgestellt wird, herauszufiltern und um gefilterte Druckluft (114) über den Ausgangsanschluss (110) der Lufttrocknungseinheit bereitzustellen, die Ölabscheidereinheit (106) ferner umfassend eine Ölstandssensoreinheit (116), die konfiguriert ist, um ein Ölstandssignal (OL) bereitzustellen, das eine an der Ölabscheidereinheit (106) gefilterte Ölmenge (OV) anzeigt; und wobei
- die Luftaufbereitungssteuereinheit (122) ferner konfiguriert ist, um unter Verwendung der Luftaufbereitungsdaten (124) ein erwartetes Ölabscheiderfüllvolumen (EV) zu bestimmen, um das Ölstandssignal (OL) zu empfangen und um in Abhängigkeit von dem erwarteten Ölabscheiderfüllvolumen und dem aktuellen Ölstandssignal (OL) ein Wartungsbedarfssignal (SR) bereitzustellen, und wobei
die Ölabscheidereinheit (106) ferner eine Temperatursensoreinheit (126, 226) umfasst, die konfiguriert ist, um einen aktuellen Temperaturwert (To) an der Ölabscheidereinheit (106) zu bestimmen und um ein Temperatursignal (TS) bereitzustellen, das diesen anzeigt, und wobei die Luftaufbereitungssteuereinheit (122) ferner konfiguriert ist, um das Temperatursignal (TS) zu empfangen und um in Abhängigkeit davon eine Regenerationsphase der Lufttrocknungseinheit (118) zu steuern, wobei in der Regenerationsphase getrocknete Luft aus der pneumatischen Einheit verwendet wird, um ein Trockenmittelmaterial (4) in der Lufttrocknungseinheit zu spülen und anschließend als Abluft (117) auszulassen.

2. Luftversorgungssystem (100, 200, 300, 400, 500, 600, 700) nach Anspruch 1, wobei die Luftaufbereitungssteuereinheit (122) konfiguriert ist, um das Wartungsbedarfssignal (SR) bereitzustellen, bei dem Bestimmen, dass das Ölstandssignal (OL) eine in der Ölabscheidereinheit (106) gefilterte Ölmenge (OV) anzeigt, die über einem kritischen Füllwert liegt, der als eine Funktion des erwarteten Ölabscheiderfüllvolumens (EV) bestimmt wird.

3. Luftversorgungssystem (200) nach Anspruch 1, wobei die Temperatursensoreinheit (126, 226) ferner konfiguriert ist, um einen aktuellen Temperaturwert einer Umgebungsluft (Ta) zu bestimmen und um das Temperatursignal (TS) bereitzustellen, das diesen ferner anzeigt, und wobei die Luftaufbereitungssteuereinheit ferner konfiguriert ist, um eine Menge an getrockneter, gefilterter Druckluft (115) in Abhängigkeit von einem Unterschied zwischen dem aktuellen Temperaturwert an der Ölabscheidereinheit (To) und dem aktuellen Temperaturwert der Umgebungsluft (Ta) zu steuern, insbesondere so, dass bei kleineren Temperaturunterschieden eine geringere Menge an getrockneter, gefilterter Druckluft (115) verwendet wird.

4. Luftversorgungssystem (100, 200, 300, 400, 500, 600, 700) nach einem der vorstehenden Ansprüche, wobei die Luftaufbereitungssteuereinheit (122) konfiguriert ist, um das Wartungsbedarfssignal (SR) an ein Armaturenbrett (125) eines Fahrzeugs (1000) bereitzustellen.

5. Luftversorgungssystem (100, 200, 300, 400) nach einem der vorstehenden Ansprüche, wobei die Ölstandssensoreinheit (116) und optional eine Temperatursensoreinheit (126, 226) in Signalkommunikation mit einem Fahrzeug-Controller-Area-Network-Bus (5) steht oder stehen.

6. Luftversorgungssystem (300, 500) nach einem der vorstehenden Ansprüche, wobei die Luftaufbereitungssteuereinheit (122) ein integraler Bestandteil der Lufttrocknungseinheit (118) ist.

7. Luftversorgungssystem (600) nach einem der vorstehenden Ansprüche, wobei die Ölstandssensoreinheit (116) und optional eine Temperatursensoreinheit (126, 226) in Signalkommunikation mit einer elektronischen Steuereinheit (128) steht oder stehen, die ferner konfiguriert ist, um die Luftaufbereitungsdaten von der Lufttrocknungseinheit zu empfangen, wobei die elektronische Steuereinheit (128) als die Luftaufbereitungssteuereinheit (122) fungiert.

8. Luftversorgungssystem (700) nach einem der vorstehenden Ansprüche, wobei die Ölstandssensoreinheit (116) und optional eine Temperatursensoreinheit (126, 226) in Signalkommunikation mit einer ersten elektronischen Steuereinheit (129) steht oder stehen, und wobei die Lufttrocknungseinheit (118) konfiguriert ist, um die Luftaufbereitungsdaten (124) einer zweiten elektronischen Steuereinheit (130) bereitzustellen, die sich von der ersten elektronischen Steuereinheit (128) unterscheidet, wobei die erste elektronische Steuereinheit und die zweite elektronische Steuereinheit einen Bestandteil einer dezentralen Luftaufbereitungssteuereinheit (122) ausbilden.

9. Pneumatisches System (800) für ein Fahrzeug (1000), umfassend ein Luftversorgungssystem (100, 200, 300, 400, 500, 600, 700) nach einem der vorstehenden Ansprüche 1 bis 8 und eine pneumatische Einheit (12), die mit dem pneumatischen Versorgungsanschluss (2) des Luftversorgungssystems verbunden ist, insbesondere eine Federungseinheit (13) und/oder eine Bremseinheit (14).

10. Fahrzeug (1000), insbesondere ein Nutzfahrzeug (1000), umfassend ein pneumatisches System (10) nach Anspruch 9.

11. Verfahren (900) zum Steuern des Betriebs eines Luftversorgungssystems (100, 200, 300, 400, 500, 600, 700) zum Überwachen der Ölverschleppung in einem pneumatischen System (10), das Verfahren (900) umfassend:
- Bereitstellen (902) von Druckluft (104) einer Druckluftversorgung (1);
- Herausfiltern (904) von Öl (112) aus der Druckluft (104) und Bereitstellen gefilterter Druckluft (114);
- Trocknen (906) der gefilterten Druckluft (114) und Bereitstellen getrockneter gefilterter Druckluft (115) einem pneumatischen Versorgungsanschluss (2);
- Ermitteln oder Bestimmen (908) von Luftaufbereitungsdaten (124), die einen Betrieb einer Kompressoreinheit (102) anzeigen, insbesondere eine Menge an Druckluft (104), die durch eine Kompressoreinheit (102) in einer bestimmten Zeitspanne bereitgestellt wird,
**dadurch gekennzeichnet, dass** das Verfahren ferner umfasst
- Bereitstellen (910) eines Ölstandssignals (OL), das eine gefilterte Ölmenge (OV) anzeigt;
- Bestimmen (912) eines erwarteten Ölabscheiderfüllvolumens (EV) unter Verwendung der Luftaufbereitungsdaten (124), und
- Empfangen des Ölstandssignals (OL) und Bereitstellen (914) eines Wartungsbedarfssignals (SR) in Abhängigkeit von dem erwarteten Ölabscheiderfüllvolumen (EV) und dem aktuellen Ölstandssignal (OL), und
- Bestimmen (916) eines aktuellen Temperaturwerts (To) an einer Ölabscheidereinheit (106) und Bereitstellen eines Temperatursignals (TS), das diesen anzeigt; und
- Steuern (918) einer Regenerationsphase einer Lufttrocknungseinheit (118) in Abhängigkeit hiervon, insbesondere durch Steuern einer Menge an getrockneter, gefilterter Druckluft (115) in Abhängigkeit von einem Absolutwert eines Unterschieds zwischen dem aktuellen Temperaturwert an dem Ölabscheider (To) und einem aktuellen Temperaturwert der Umgebungsluft (Ta), insbesondere so, dass bei kleineren Temperaturunterschieden eine geringere Menge an getrockneter, gefilterter Druckluft (115) verwendet wird.

12. Verfahren (900) nach Anspruch 11, ferner umfassend das Bereitstellen (914) des Wartungsbedarfssignals einem Armaturenbrett (125) eines Fahrzeugs (1000), das das gesteuerte Luftversorgungssystem (100, 200, 300, 400, 500, 600, 700) umfasst.

13. Computerprogramm, umfassend Anweisungen, die das Luftversorgungssystem veranlassen, das Verfahren (800) nach einem der Ansprüche 11 bis 12 vorzunehmen, wenn das Programm durch ein Luftversorgungssystem ausgeführt wird.

## Revendications

1. Système d'alimentation en air (100, 200, 300, 400, 500, 600, 700) destiné à un véhicule, en particulier destiné à un véhicule utilitaire, permettant d'alimenter de l'air à une unité pneumatique (12), le système d'alimentation en air comprenant :
- une unité de compresseur (102) permettant de fournir de l'air comprimé à une alimentation en air comprimé (1),
- une unité de séchage d'air (118) ayant un orifice d'entrée (120) permettant de recevoir de l'air comprimé fourni par l'unité de compresseur (102) et conçue pour sécher l'air comprimé reçu (114) et pour fournir de l'air comprimé séché (115) à un orifice d'alimentation pneumatique (2), en particulier pour alimentation à l'unité pneumatique (12)
- une ligne d'évacuation d'air (117) vers un orifice d'évacuation (3),
le système d'alimentation en air (100) comprenant en outre :
- une unité de commande de traitement d'air (122) conçue pour constater ou déterminer des données de traitement d'air (124) indiquant un fonctionnement de l'unité de compresseur (102), en particulier une quantité d'air comprimé (104) fournie par l'unité de compresseur (102) dans un laps de temps donné,
**caractérisé en ce que** pour surveiller l'huile transportée de l'unité de compresseur (102) à l'unité de séchage d'air (118), le système d'alimentation en air (100, 200, 300, 400, 500, 600, 700) comprend en outre :
- une unité de séparation d'huile (106) ayant un orifice d'entrée (108) raccordé pneumatiquement à l'alimentation en air comprimé (1) et un orifice de sortie (110) raccordé pneumatiquement à l'orifice d'entrée (120) de l'unité de séchage d'air (118), l'unité de séparation d'huile (106) étant conçue pour éliminer par filtrage l'huile (112) de l'air comprimé (104) fourni par l'unité de compresseur (102) et pour fournir de l'air comprimé filtré (114) par l'intermédiaire de l'orifice de sortie (110) à l'unité de séchage d'air, l'unité de séparation d'huile (106) comprenant en outre une unité de capteur de niveau d'huile (116) configurée pour fournir un signal de niveau d'huile (OL) indiquant une quantité d'huile filtrée (OV) au niveau de l'unité de séparation d'huile (106) ; et dans lequel
- l'unité de commande de traitement d'air (122) est configurée en outre pour déterminer un volume de remplissage attendu de séparateur d'huile (EV) à l'aide des données de traitement d'air (124), pour recevoir le signal de niveau d'huile (OL) et pour fournir un signal de service requis (SR), en dépendance du volume de remplissage attendu de séparateur d'huile et du signal de niveau d'huile (OL) actuel, et dans lequel
l'unité de séparation d'huile (106) comprend en outre une unité de capteur de température (126, 226) configurée pour déterminer une valeur de température actuelle (To) au niveau de l'unité de séparation d'huile (106) et pour fournir un signal de température (TS) indiquant celle-ci, et dans lequel l'unité de commande de traitement d'air (122) est configurée en outre pour recevoir le signal de température (TS) et pour commander une phase de régénération de l'unité de séchage d'air (118) en dépendance de celui-ci, dans lequel dans la phase de régénération, l'air séché provenant de l'unité pneumatique est utilisé pour rincer un matériau dessiccant (4) dans l'unité de séchage d'air puis est évacué en tant qu'air d'évacuation (117).

2. Système d'alimentation en air (100, 200, 300, 400, 500, 600, 700) selon la revendication 1, dans lequel l'unité de commande de traitement d'air (122) est configurée pour fournir le signal de service requis (SR) lorsqu'on détermine que le signal de niveau d'huile (OL) indique une quantité d'huile filtrée (OV) dans l'unité de séparation d'huile (106) qui est supérieure à une valeur critique de remplissage déterminée en tant que fonction du volume de remplissage attendu de séparateur d'huile (EV).

3. Système d'alimentation en air (200) selon la revendication 1, dans lequel l'unité de capteur de température (126, 226) est configurée en outre pour déterminer une valeur de température actuelle d'air ambiant (Ta) et pour fournir le signal de température (TS) indiquant en outre celle-ci, et dans lequel l'unité de commande de traitement d'air est configurée en outre pour commander une quantité d'air comprimé filtré séché (115) en dépendance d'une différence entre la valeur de température actuelle au niveau de l'unité de séparation d'huile (To) et la valeur de température actuelle d'air ambiant (Ta), en particulier de sorte qu'une quantité moindre d'air comprimé filtré séché (115) est utilisée pour de plus petites différences de température.

4. Système d'alimentation en air (100, 200, 300, 400, 500, 600, 700) selon l'une quelconque des revendications précédentes, dans lequel l'unité de commande de traitement d'air (122) est configurée pour fournir le signal de service requis (SR) à un tableau de bord (125) d'un véhicule (1000).

5. Système d'alimentation en air (100, 200, 300, 400) selon l'une quelconque des revendications précédentes, dans lequel l'unité de capteur de niveau d'huile (116), et facultativement une unité de capteur de température (126, 226), est ou sont en communication de signal avec un bus réseau de dispositif de commande de véhicule (5).

6. Système d'alimentation en air (300, 500) selon l'une quelconque des revendications précédentes, dans lequel l'unité de commande de traitement d'air (122) est une partie intégrante de l'unité de séchage d'air (118).

7. Système d'alimentation en air (600) selon l'une quelconque des revendications précédentes, dans lequel l'unité de capteur de niveau d'huile (116) et facultativement une unité de capteur de température (126, 226) est ou sont en communication de signal avec une unité de commande électronique (128) qui est configurée en outre pour recevoir les données de traitement d'air en provenance de l'unité de séchage d'air, l'unité de commande électronique (128) jouant le rôle d'unité de commande de traitement d'air (122).

8. Système d'alimentation en air (700) selon l'une quelconque des revendications précédentes, dans lequel l'unité de capteur de niveau d'huile (116) et facultativement une unité de capteur de température (126, 226) est ou sont en communication de signal avec une première unité de commande électronique (129), et dans lequel l'unité de séchage d'air (118) est configurée pour fournir les données de traitement d'air (124) à une seconde unité de commande électronique (130), différente de la première unité de commande électronique (128), la première unité de commande électronique et la seconde unité de commande électronique faisant partie d'une unité de commande de traitement d'air (122) décentralisée.

9. Système pneumatique (800) destiné à un véhicule (1000), comprenant un système d'alimentation en air (100, 200, 300, 400, 500, 600, 700) selon l'une quelconque des revendications 1 à 8 précédentes, et une unité pneumatique (12) raccordée à l'orifice d'alimentation pneumatique (2) du système d'alimentation en air, en particulier une unité de suspension (13) et/ou une unité de freinage (14).

10. Véhicule (1000), en particulier un véhicule utilitaire (1000), comprenant un système pneumatique (10) selon la revendication 9.

11. Procédé (900) permettant de commander le fonctionnement d'un système d'alimentation en air (100, 200, 300, 400, 500, 600, 700) permettant de surveiller l'huile transportée dans un système pneumatique (10), le procédé (900) comprenant :
- la fourniture (902) d'air comprimé (104) à une alimentation en air comprimé (1) ;
- l'élimination par filtrage (904) de l'huile (112) de l'air comprimé (104) et la fourniture d'air comprimé filtré (114) ;
- le séchage (906) de l'air comprimé filtré (114) et la fourniture de l'air comprimé filtré séché (115) à un orifice d'alimentation pneumatique (2) ;
- la constatation ou la détermination (908) de données de traitement d'air (124) indiquant un fonctionnement d'une unité de compresseur (102), en particulier une quantité d'air comprimé (104) fournie par une unité de compresseur (102) dans un laps de temps donné,
**caractérisé en ce que** le procédé comprend en outre
- la fourniture (910) d'un signal de niveau d'huile (OL) indiquant une quantité d'huile filtrée (OV) ;
- la détermination (912) d'un volume de remplissage attendu de séparateur d'huile (EV) à l'aide des données de traitement d'air (124), et
- la réception du signal de niveau d'huile (OL) et la fourniture (914) d'un signal de service requis (SR), en dépendance du volume de remplissage attendu de séparateur d'huile (EV) et du signal de niveau d'huile (OL) actuel, et
- la détermination (916) d'une valeur de température actuelle (To) au niveau d'une unité de séparation d'huile (106) et la fourniture d'un signal de température (TS) indiquant celle-ci ; et
- la commande (918) d'une phase de régénération d'une unité de séchage d'air (118) en dépendance de celle-ci, en particulier en commandant une quantité d'air comprimé filtré séché (115) en dépendance d'une valeur absolue d'une différence entre la valeur de température actuelle au niveau du séparateur d'huile (To) et d'une valeur de température actuelle d'air ambiant (Ta), en particulier de sorte qu'une quantité moindre d'air comprimé filtré séché (115) est utilisée pour de plus petites différences de température.

12. Procédé (900) selon la revendication 11, comprenant en outre, la fourniture (914) du signal de service requis à un tableau de bord (125) d'un véhicule (1000) qui comprend le système d'alimentation en air (100, 200, 300, 400, 500, 600, 700) commandé.

13. Programme informatique comprenant des instructions, qui amènent le système d'alimentation en air à effectuer le procédé (800) selon l'une quelconque des revendications 11 à 12 lorsque le programme est exécuté par un système d'alimentation en air.
